# EUROPEAN PATENT APPLICATION

(11) **EP 4 559 978 A1**
(43) Date of publication of application: **28.05.2025**
(21) Application number: 23843134.0
(22) Date of filing: 27.04.2023
(51) Int. Cl.: C08L 83/04, C08L 83/06, C08G 77/04, C08G 77/16, C08G 77/20, C08K 5/5415

(54) **MOISTURE-CURABLE SILOXANE COMPOSITION**

(30) Priority: 20.07.2022 KR 20220089773
(71) Applicant: KCC Silicone Corporation, Seoul 06608 (KR)
(72) Inventor: CHOI, Taehoon, Seoul 06608 (KR); SEO, Seungkwang, Seoul 06608 (KR); KIM, Seunghan, Seoul 06608 (KR); KANG, Seung-Hyun, Seoul 06608 (KR)
(74) Representative: Cabinet Laurent & Charras
(86) International application number: PCT/KR2023/005830
(87) International publication number: WO 2024/019275

(57) **Abstract**

The present invention relates to a moisture-curable siloxane composition and a cured product prepared therefrom, the composition comprising organohydroxypolysiloxane, organopolysiloxane, an alkoxy group-containing silane compound, a curing catalyst, and an adhesion imparting agent, wherein: the organohydroxypolysiloxane contains an alkoxy group-containing repeating unit; the organopolysiloxane contains a first organopolysiloxane having both ends capped with alkoxy groups and a second organopolysiloxane having both ends capped with silanol groups; and the adhesion imparting agent contains a cyclosiloxane-based compound.

## Description

### [Technical Field]

### [CROSS-REFERENCE TO RELATED APPLICATIONS]

This application claims the benefit of priority based on Korean Patent Application No. 10-2022-0089773 filed on July 20, 2022, and all contents disclosed in the relevant Korean Patent Application are included as part of the present specification.

The present disclosure relates to a moisture-curable siloxane composition which shows an adhesion property to a base, a proper set-to-touch time, and a proper viscosity to make workability superior, shows excellent storage stability, shows an excellent transparency and hardness in a coating film prepared, and shows less surface tackiness.

### [Background Art]

As an organopolysiloxane composition, which is cured at a normal temperature of 25 °C without being additionally heated to produce a cured product, makes contact moisture in the air, the organopolysiloxane composition may undergo a curing reaction and may be formed in one component type. Accordingly, since the composition does not require a separate previous process, the composition shows excellent workability. For this reason, one-component moisture-curable organopolysiloxane composition has been widely used as an elastic adhesive agent and a coating agent in an electrical and electronic industrial field, as well as a sealant for construction. Such one-component moisture-curable organopolysiloxane composition is classified into acetate-type, oxime-type, alcohol-type, and acetone-type, based on the type of by-products generated during curing. Among them, the alcohol-type organopolysiloxane compositions have been widely used due to advantages of a lower odor without corroding a metallic substrate, and extensively used in a sensitive field such as an electrical and electronic field.

Specifically, Japanese Patent No. 4045439 (Patent document 1) discloses a normal-temperature-curable organopolysiloxane composition that includes organopolysiloxane, branched organopolysiloxane, a silane compound containing a hydrolyzable group, and a silane coupling agent. However, the conventional moisture-curable organopolysiloxane composition includes a filler, such as calcium carbonate to reduce the transparency of the cured material, thereby degrading the visibility for a circuit mounted when being coated on an electronic circuit board, which causes the inconvenience during processes, such that a failed part is not be detected when the circuit board is failed, and thereby exhibiting an inferior adhesion property to a base.

Accordingly, there is required studies and researches on an excellent moisture-curable siloxane composition which shows an excellent adhesion property to a base, a proper set-to-touch time, and a proper viscosity to make workability superior, show an excellent storage stability, shown a curable property at a normal temperature, and shows an excellent transparency in a coating film prepared without a filler such as calcium carbonate.

### [Disclosure]

### [Technical Problem]

Accordingly, the present disclosure relates to an excellent curable siloxane composition which has an excellent adhesion property to a base, has a proper set-to-touch time and a proper viscosity to make workability superior, has an excellent storage stability, shows a curable property at a normal temperature, and shows an excellent transparency in a coating film prepared without a filler such as calcium carbonate.

### [Technical Solution]

The present disclosure provides a moisture-curable siloxane composition which includes organohydroxypolysiloxane, organopolysiloxane, an alkoxy group-containing silane compound, a curing catalyst, and a tackifier,
the organohydroxypolysiloxane includes alkoxy group-containing repeating unit,
the organopolysiloxane includes first organopolysiloxane capped with an alkoxy group at opposite ends, and second organopolysiloxane capped with a silanol group at opposite ends, and
the tackifier includes a cyclosiloxane-based compound.

In addition, the present disclosure provides a cured product prepared by curing the siloxane composition.

### [Advantageous Effects]

According to the present disclosure, the moisture-curable siloxane composition shows an excellent adhesion property to a base, a proper set-to-touch time, and a proper viscosity to make workability superior, and shows excellent storage stability, and shows a curable property at a normal temperature. In addition, since the siloxane composition does not include a filler such as calcium carbonate, the prepared coating film shows excellent transparency and hardness and shows less surface tackiness. Accordingly, the siloxane composition is significantly appropriate as a material, especially, an adhesive, a coating agent, a potting agent, a sealant, in a sensitive field, such as an electric or electronic field.

### [Best Mode]

Hereinafter, the present disclosure will be described in detail.

In this specification, "(meth) acryl" refers to "acryl" and/or "methacryl", and "(meth) acrylate" refers to "acrylate" and/or "methacrylate".

In addition, the viscosity is measured by a method generally known in the art. For example, the viscosity may be a value measured at 25 °C using, for example, a Brookfield Viscometer (LVDV) or Rheometer (MCR301; Anton Paar).

### Moisture-curable siloxane composition

The present disclosure provides a moisture-curable siloxane composition which includes organohydroxypolysiloxane, organopolysiloxane, an alkoxy group-containing silane compound, a curing catalyst, and a tackifier,

### Organohydroxypolysiloxane

The organohydroxypolysiloxane serves to improve the hardness of the cured product by forming a main skeleton of the siloxane composition.

The organohydroxypolysiloxane includes an alkoxy group-containing repeating unit, For example, the organohydroxypolysiloxane may be expressed following Chemical formula 1.

[Chemical formula 1] [SiO_{1/2}(R¹)₃]ₐ[SiO_{1/2}(OR²)₃]_{b}[SiO_{2/2}(OR³)₂]_{c}[SiO_{3/2}(OR⁴)]_{d}[SiO_{4/2}]ₑ(OH)

In Chemical formula 1,
each of R¹ to R⁴ is independently hydrogen, or an alkyl group, a cycloalkyl group, an alkenyl group, an aryl group, or an aralkyl group which is substituted or unsubstituted.
'a' is greater than 0.2 and less than 0.6,
'b + c + d' is greater than 0.01 and less than 0.2,
'e' is '0.09' to '0.7',
'f' is greater than '0' and less than '0.05', and
'a + b + c + d + e + f' is 1.

For example, each of R¹ to R⁴ is independently hydrogen, or a C₁₋₁₅ alkyl group, a C₅₋₁₅ cycloalkyl group, a C₂₋₁₀ alkenyl group, a C₆₋₁₅ aryl group, or a C₇₋₁₅ aralkyl group which is substituted or unsubstituted. In this case, the substitution may be substituted with a halogen atom or a cyanoalkyl group. Specifically, each of R¹ to R⁴ may be independently be hydrogen; an alkyl group such as a methyl group, an ethyl group, a propyl group, a butyl group, a pentyl group, a hexyl group, an octyl group, a decyl group, or a dodecyl group; a cycloalkyl group such as cyclohexyl group; an alkenyl group such as a vinyl group and an allyl group; an aryl group such as a phenyl group, a tolyl group, and an xylyl group; an aralkyl group such as a benzyl group, a 2-phenylethyl group, or a 2-phenylpropyl group, and more specifically, may be hydrogen or a methyl group. In this case, the alkyl group and the alkenyl group may be linear or branched.

Specifically, 'a' may range from 0.3 to 0.55 or 0.38 to 0.50, 'b + c + d' may range from 0.02 to 0.18 or 0.05 to 0.15, 'e' may range 0.2 to 0.6 or 0.35 to 0.55, 'f' may be greater than 0 and less than 0.04, or greater than 0 and less than 0.02, and 'a+b+c+d+e+f' may be 1.

When 'a' is less than the above range, the mechanical properties of the cured product are degraded such that the cured product loses the function as the coating agent. When 'a' is over the above range, a higher hardness of cured product may not be implemented. In addition, when 'b+c+d' is less than the above range, curing may be failed, or a higher hardness of the cured product may not be obtained. When 'b+c+d' is over the above range, a curing rate may be excessively reduced, or a cured product having higher brittleness may be formed to cause the limitation to industrial use. In addition, when 'e' is less than the above range, the content of the Q unit ([SiO_{4/2}] repeating unit) is reduced, so the hardness of the cured product may not be implemented. When 'e' is over the above range, the brittleness of the cured product is increased to cause the limitation to industrial use. In addition, when 'f' is greater than the above range, the coating surface of the cured product may be tacky more, thereby cause inconvenience, such as sticking dust, in a process in a working environment.

The organohydroxypolysiloxane may have a hydroxyl group content ranging from greater than 0 to 0.24 mmol/g, or ranging from greater than 0 to 0.15 mmol/g. When the hydroxyl group content of the organohydroxypolysiloxane exceeds the above range, the tackiness of the coating surface of the cured product may be increased, thereby cause inconvenience, such as sticking dust, in a process in a working environment.

In addition, the organohydroxypolysiloxane may be prepared by allowing branched organopolysiloxane to react with a tetrafunctional alkoxy silane, after preparing branched organopolysiloxane having at least one hydroxydimethylsiloxy group (-Si(CH₃)₂OH), at least one trimethylsiloxyl group ((-Si(CH₃)₃), and at least one Q-functional unit (-SiO_{4/2}). A method for preparing the branched organopolysiloxane may be well known in the art to which those skilled pertain. For example, methods disclosed in US Pat. No. 2,676,182 and US Pat. No. 2,814,601 may be employed for the method for preparing the branched organopolysiloxane. When the organohydroxypolysiloxane may be prepared by allowing branched organopolysiloxane to react with a tetrafunctional alkoxy silane, after preparing the branched organopolysiloxane as described above, it is preferable that the content of each repeating unit may be easily adjusted to remain by a target amount, but the present disclosure is not limited thereto.

### Organopolysiloxane

The organopolysiloxane serves to adjust the viscosity of the siloxane composition and impart flexibility to the prepared cured product.

The organopolysiloxane includes first organopolysiloxane capped with an alkoxy group at opposite ends, and second organopolysiloxane capped with a silanol group at opposite ends. When the siloxane composition includes two types of organopolysiloxane having different end capping groups as described above, that is, when the first organopolysiloxane and the second organopolysiloxane are used together, even when moisture is absent, since the hydroxyl group bound to silicon and the alkoxy group bound to silicon are cured by the condensation catalyst, the siloxane composition may be rapidly cured even at normal temperature.

Meanwhile, when only the first organopolysiloxane capped with the alkoxy group at opposite ends is used as the organopolysiloxane, the prepared coating film may be cracked under the higher condition for reliability evaluation. In addition, when only the second organopolysiloxane capped with the silanol group at opposite ends is used, the hardness of the prepared coating film is insufficient. Accordingly, the protective property of the material in the electrical and electronic fields such as the PCB is insufficient.

### <First organopolysiloxane>

The first organopolysioxane may be expressed through, for example, following Equation 2.

[Chemical formula 2] [(R⁵O)₍₃₋ᵢ₎Si(R⁶)ᵢ]-Y¹-[SiO_{2/2}(R⁷)₂]ⱼ-[Si(R⁸)₂]-Y²-[(R⁵O)₍₃₋ᵢ₎Si(R⁶)ᵢ]

In Chemical formula 2,
each of R⁵ to R⁸ is independently an alkyl group, a cycloalkyl group, an alkenyl group, an aryl group, or an aralkyl group which is substituted or unsubstituted,
each of Y¹ and Y² is independently an oxy group, or an alkylene group which is substituted or unsubstituted,
'i' is 0 or 1, and
'j' is an integer of 1 to 300.

For example, each of R⁵ to R⁸ is independently a C₁₋₁₅ alkyl group, a C₅₋₁₅ cycloalkyl group, a C₂₋₁₀ alkenyl group, a C₆₋₁₅ aryl group, or a C₇₋₁₅ aralkyl group which is saturated or unsaturated. In this case, the substitution may be substituted with a halogen atom or a cyanoalkyl group. Specifically, each of R⁵ to R⁸ may be independently be an alkyl group such as a methyl group, an ethyl group, a propyl group, a butyl group, a pentyl group, a hexyl group, an octyl group, a decyl group, or a dodecyl group; a cycloalkyl group such as a cyclohexyl group; an aralkyl group such as a vinyl group and an allyl group; an aryl group, such as a phenyl group, a tolyl group, or a xylyl group, an aralkyl group such as a benzyl group, a 2-phenylethyl group, or a 2-phenylpropyl group, and more specifically, may be a methyl group.

Each of Y¹ and Y² may be independently an oxy group; or a C₁₋₁₅ alkylene group which is substituted or unsubstituted. Specifically, each of Y¹ and Y² may be independently a C₁₋₁₀ alkylene group or a C₁₋₇ alkylene group, and the alkylene group may be linear or branched. In this case, the alkylene refers to a branched, linear or cyclic divalent radical derived by removing one hydrogen atom from the carbon atom of the alkyl group For example, the alkylene may include methylene (-CH₂-), 1,1-ethylene (-CH(CH₃)-), 1,2-ethylene (-CH₂CH₂-), 1,1-propylene (-CH(CH₂CH₃)-), 1,2-propylene(-CH₂CH(CH₃)-), 1,3-propylene (-CH₂CH₂CH₂-), 1,4-butylene(-CH₂CH₂CH₂CH₂-), or 2,4-butylene (-CH₂(CH₃)CH₂CH₂-), but the present disclosure is not limited thereto.

In this case, the alkyl group and the alkenyl group may be linear or branched.

The first organopolysiloxane may have a viscosity ranging from 10 to 10,000 cP, or ranging from 40 to 6,000 cP at 25 °C. When the first organopolysiloxan is less than the above range at 25°C, the stronger volatility is shown to cause a working risk, or mechanical properties of the cured product may be weakened. When the viscosity exceeds the range, the viscosity of the siloxane composition may be increased, so the use of the siloxane composition may be limited.

Specifically, the first organopolysiloxane may include at least two types of first organopolysiloxanes having different viscosities at 25 °C. When at least two types of first organopolysiloxanes having different viscosities are used as described above, the viscosity of the composition may be maintained low and the prepared coating film may be flexible to be prevented from being easily broken.

For example, the first organopolysiloxane may include a (1-1)-th organopolysiloxane having the viscosity ranging from 10 cP to 500 cP or ranging from 40 cP to 100 cP and a (1-2)-th organopolysiloxane having viscosity ranging from 1,000 to 10,000 cP or ranging from 4,000 to 6,000 cP. When the viscosity of the (1-1)-th organopolysiloxane is less than the range, the stronger volatility is shown such that the workability of the composition is insufficient. When the viscosity of the (1-1)-th organopolysiloxane is over the range, the siloxane composition including it shows higher viscosity, so the working manner may be limited. When the viscosity of the (1-2)-th organopolysiloxane is less than the range, the prepared coating film is brittle to be easily cracked. When the viscosity of the (1-2)-th organopolysiloxane is over the range, the composition shows higher viscosity, so the working manner may be limited.

The first organopolysiloxane may be included in the siloxane composition, in a content ranging from 55 to 140 wt parts or ranging from 60 to 110 wt parts based on 100 wt parts of the organohydroxypolysiloxane. When the content of the first organopolysiloxane is less than the content range, the siloxane composition shows excessively higher viscosity, so a work such as spray coating may be failed. When the content of the first organopolysiloxane is over the content range, the content of the organohydroxypolysiloxane becomes lower, so the hardness or the strength of the cured product prepared may be insufficient.

Specifically, based on 100 wt parts of organohydroxypolysiloxane, the (1-1)-th organopolysiloxane in a content ranging from 1 to 100 wt parts, ranging from 4 to 80 wt parts or 30 to 60 wt parts, and the (1-2)-th organopolysiloxane in a content ranging from 20 to 100 wt parts, ranging from 20 to 70 wt parts, or ranging from 25 to 50 wt parts may be included. When the content of the (1-1)-th organopolysiloxane is less than the range, the siloxane composition shows higher viscosity, so a work may be failed. When the content of the (1-1)-th organopolysiloxane is over the range, the strength of the cured product may be insufficient. When the content of the (1-2)-th organopolysiloxane is less than the range, the surface of the cured product may be defective. When the content of the (1-2)-th organopolysiloxane is over the range, the strength of the cured product may be insufficient.

### <Second organopolysiloxane>

The second organopolysioxane may be expressed through, for example, following Equation 3.

[Chemical formula 3] HO-[SiO_{2/2}(R¹⁰)₂]ₖ-OH

In Chemical formula 3,
R¹⁰ may be an alkyl group, a cycloalkyl group, an alkenyl group, an aryl group, or an aralkyl group which is substituted or unsubstituted.
'k' is a number allowing the viscosity of the second organopolysiloxane at 25 °C to range from 100 to 100,000 cP.

For example, R¹⁰ is independently a C₁₋₁₅ alkyl group, a C₅₋₁₅ cycloalkyl group, a C₂₋₁₀ alkenyl group, a C₆₋₁₅ aryl group, or a C₇₋₁₅ aralkyl group which is saturated or unsaturated. In this case, the substitution may be substituted with a halogen atom or a cyanoalkyl group. Specifically, the R¹⁰ may be independently be an alkyl group, such as a methyl group, an ethyl group, a propyl group, a butyl group, a pentyl group, a hexyl group, an octyl group, a decyl group, or a dodecyl group; a cycloalkyl group such as a cyclohexyl group; an alkenyl group, such as a vinyl group and an allyl group; an aryl group, such as a phenyl group, a tolyl group, or a xylyl group; an aralkyl group such as a benzyl group, a 2-phenylethyl group, or a 2-phenylpropyl group, and more specifically, may be a methyl group.

In this case, the alkyl group and the alkenyl group may be linear or branched.

The second organopolysiloxane may have a viscosity ranging from 100 to 100,000 cP, or ranging from 500 to 10,000 cP, or ranging from 800 to 6,000 cP, at 25 °C. When the viscosity of the second organopolysiloxane is less than the range at 25 °C, the siloxane composition has a curing rate, which is excessively higher, so workability may be degraded. When the viscosity of the second organopolysiloxane is over the range, the siloxane composition has a curing rate, which is excessively lower, so productivity may be degraded or foreign substances may be infiltrated into the cured product in curing.

The second organopolysiloxane may be included in the siloxane composition, in a content ranging from 30 to 100 wt parts, ranging from 35 to 95 wt parts or ranging from 50 to 70 wt parts, based on 100 wt parts of the organohydroxypolysiloxane. When the content of the second organopolysiloxane is less than the content range, bonding force may be weakened in curing. When the content of the second organopolysiloxane is over the content range, the tackiness of the coating surface of the cured product may be increased, so the possibility, in which the surface of the cured product is contaminated in curing at a normal temperature, is increased, thereby causing the use inconvenience.

The organohydroxypolysiloxane, the first organopolysiloxane, and the second organopolysiloxane may be included in the composition in a weight ratio of 1: 0.55 to 1.4: 0.3 to 1.0, or 1: 0.6 to 1.1: 0.5 to 0.7.

When the weight ratio of the first organopolysiloxane is less than the above range based on the content of the organohydroxypolysiloxane, the flexibility of the cured product after curing is lowered, so brittleness becomes significantly weakened and the curing rate is significantly decreased. When the weight ratio of the first organopolysiloxane is greater than the above range, the content of the organohydroxypolysiloxane having a branched structure is lowered, so the hardness of the cured product fails to reach the target hardness.

When the weight ratio of the second organopolysiloxane is less than the above range based on the content of the organohydroxypolysiloxane, the bonding force of the cured product may be degraded. When the weight ratio of the second organopolysiloxane is over the range, the surface of the cured product may be tacky.

### Alkoxy group-containing silane compound

The alkoxy group-containing silane compound controls a set-to-touch time of the siloxane composition and adjusts the viscosity of the siloxane composition.

In addition, the alkoxy group-containing silane compound may include 1 to ten silicon atoms in one molecule. For example, the alkoxy group-containing silane may include at least one selected from the group consisting of dimethyldimethoxysilane, diphenyldimethoxysilane, methylphenyldimethoxysilane, vinylmethyldimethoxysilane, dimethyldiethoxysilane, methyltrimethoxysilane, vinyltrimethoxysilane, phenyltrimethoxysilane, methyltriethoxysilane, vinyltriethoxysilane, phenyltriethoxysilane, tetramethoxysilane, tetraethoxysilane, tetra-n-propoxysilane and tetraisopropoxysilane. Specifically, the alkoxy group-containing silane compound may be a trialkoxy-containing silane such as methyltrimethoxysilane, vinyltrimethoxysilane, phenyltrimethoxysilane, methyltriethoxysilane, vinyltriethoxysilane, phenyltriethoxysilane, tetramethoxysilane, or tetraethoxysilane.

The alkoxy group-containing silane compound may be included in the siloxane composition, in a content ranging from 10 to 85 wt parts, ranging from 15 to 70 wt parts or ranging from 20 to 50 wt parts, based on 100 wt parts of the organohydroxypolysiloxane. When the content of the alkoxy group-containing silane is less than the range, a tack free time of the composition is excessively decreased, the viscosity of the composition may be increased to degrade the workability. When the content of the alkoxy group-containing silane is over the range, as the tack free time of the composition is increased, the curing time may be prolonged to degrade the productivity or lower the strength of the cured product.

In addition, the siloxane composition may include the alkoxy group-containing silane compound and the curing catalyst in a weight ratio of 3: 1 to 40: 1, a weight ratio of 3: 1 to 25: 1, or a weight ratio of 3: 1 to 15: 1. When the weight ratio between the alkoxy group-containing silane compound and the curing catalyst is less than the range, that is, when a small amount of alkoxy group-containing silane compound is included based on the weight of the curing catalyst, the hardness of the cured product may be decreased and the cured product may be discolored. In addition, when the weight ratio between the alkoxy group-containing silane compound and the curing catalyst is over the range, that is, when an excessive amount of alkoxy group-containing silane compound is included based on the weight of the curing catalyst, the curing rate of the cured product is excessively decreased, so the workability may be insufficient or the cured product may not be cured.

### Curing catalyst

The curing catalyst promotes the curing of the composition.

The curing catalyst is not particularly limited as long as the curing catalyst may be used in the moisture-curable siloxane composition. For example, the curing catalyst may be an organic tin compound, such as dibutyltin dimethoxide, dibutyltin diacetate, dibutyltin dioctate, dibutyltin dilaurate, dibutyltin bis(acetylacetonate), dibutyltin bis (benzyl maleate), dimethyltin dimethoxide, dimethyltin diacetate, dioctyltin dioctate, dioctyltin dilaurate, tin dioctate, or dilaurate; an organic titanium compound, such as tetraisopropyltitanate tetra-n-butyl titanate, tetra-t-butyl titanate, tetra-n-propyl titanate, tetra-2-ethylhexyltitanate, diisopropyldi-t-butyltitanate, dimethoxytitanium bisacetylacetonate, diisopropoxy titanium bisethylacetoacetate, di-t-butoxytitanium bisethylacetoacetate, or di-t-butoxytitanium bismethylacetoacetate; and an amine compound, such as 3-aminopropyltrimethoxy silane, or tetramethylguanidylpropyltrimethoxysilane.

In addition, the curing catalyst may be included in the composition, in a content ranging from 1 to 10 wt parts, ranging from 1 to 9 wt parts or ranging from 4 to 9 wt parts, based on 100 wt parts of the organohydroxypolysiloxane. When the content of the curing catalyst is less than the content range, the curing rate of the composition may be decreased, or the curing may be failed. When the content of the curing catalyst is over the content range, the viscosity may be increased or the siloxane composition is cured in a severe case in the middle of storing the siloxane composition, so the use of the siloxane composition may be difficult.

### Tackifier

The tackifier may apply bonding force to the base.

The tackifier may include a cyclosiloxane-based compound. When the tackifier includes a cyclosiloxane-based compound, the tackifier may react with the coated base to apply the bonding force. For example, since the tackifier includes a cyclosiloxane group, the base and the cyclosiloxane group react with each other to improve bonding force.

In addition, the tackifier may be, for example, cyclotrisiloxane (trimer), cyclotetrasiloxane (tetramer), or cyclopentasiloxane (pentamer). Specifically, the tackifier may be a compound represented by the following Chemical formula 4. 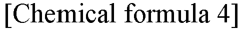 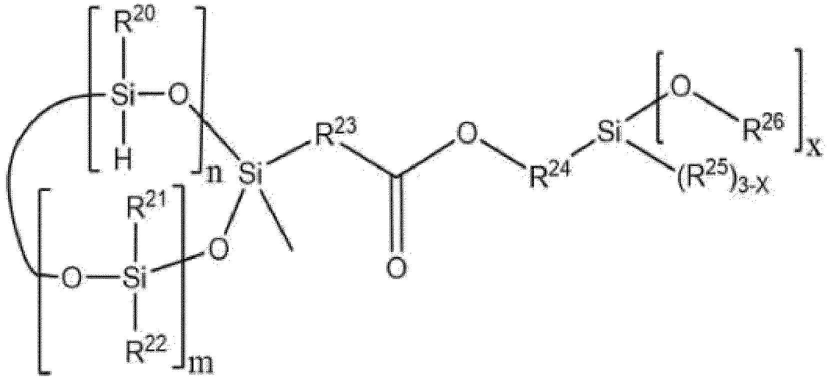
in Chemical formula 4,
Each of R²⁰ to R²², and R²⁵ and R²⁶ is independently an alkyl group which is substituted or unsubstituted.

Each of R²³ and R²⁴ is independently an alkylene group which is substituted or unsubstituted.

Each of 'm', 'n', and 'x' may ranges from 1 to 3, independently.

For example, each of R²⁰ to R²² may be independently a C₁₋₅ alkyl group or C₁₋₃ alkyl group, each of R²³ and R²⁴ may be independently a C₁₋₁₅ alkylene group, a C₁₋₁₀ alkylene group, or a C₁₋₅ alkylene group, and each of R²⁵ and R²⁶ may be independently a be C₁₋₅ alkyl group or C₁₋₃ alkyl group.

For example, 'm + n' may range from 2 to 6 or range from 3 to 4, 'm' may range from 1 to 4 or from 1 to 3, and 'n' may range from 1 to 4 or range from 1 to 2.

In this case, the alkylene group refers to a branched, linear or cyclic divalent radical derived by removing one hydrogen atom from the carbon atom of the alkyl group. For example, the alkylene group may include methylene (-CH₂-), 1,1-ethylene (-CH(CH₃)-), 1,2-ethylene (-CH₂CH₂-), 1,1-propylene (-CH(CH₂CH₃)-), 1,2-propylene (-CH₂CH(CH₃)-), 1,3-propylene (-CH₂CH₂CH₂-), 1,4-butylene (-CH₂CH₂CH₂CH₂-), or 2,4-butylene (-CH₂(CH₃)CH₂CH₂-), but the present disclosure is not limited thereto.

The alkenyl group and the alkyl group may be linear or branched.

For example, the tackifier may include an ester group and an alkoxy group. Specifically, the tackifier may include an ester group, and an alkoxy group having 1 to 5 carbon atoms or 1 to 3 carbon atoms. When the tackifier includes the ester group and the alkoxy group, the ester group of the tackifier reacts with a polar group of the base, and the alkoxy group of the tackifier reacts with the alkoxy or hydroxyl group of the organohydroxypolysiloxane or the organopolysiloxane, thereby remarkably improving the bonding force of the prepared cured product.

The tackifier may include, for example, a dimethylsiloxy unit ((CH₃)₂SiO_{2/2}) and a methylhysiloxy unit (CH₃(H)SiO_{2/2}). Specifically, the tackifier may include, for example, a dimethylsiloxy unit ((CH₃)₂SiO_{2/2}), a methylhydrogensiloxane unit (CH₃(H)SiO_{2/2}), an ester group, and a methoxy group. More specifically, the tackifier may be a compound expressed following Chemical formula 5.

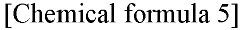

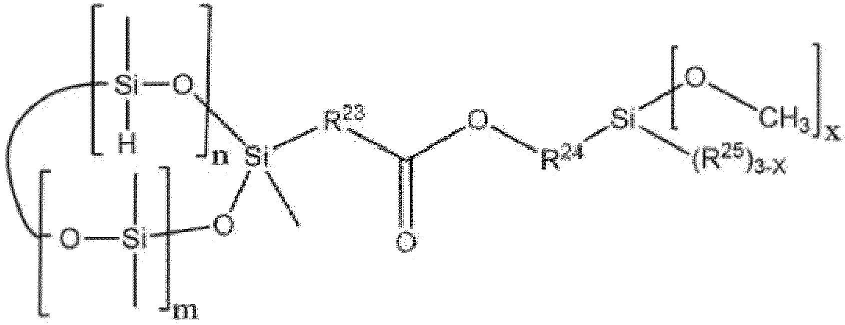

Specifically, the tackifier may include α,2,4,6,6,8-hexamethylcyclotetrasiloxanepropanoicacid 3-(trimethoxysilyl)propyl ester.

In addition, the tackifier may further include an acrylic compound.

Specifically, the tackifier may include a first tackifier containing a cyclosiloxyl group and a second tackifier containing an acryl group. When the siloxane composition includes the first tackifier and the second tackifier as the tackifiers, a cyclosiloxyl group and an acryl group react, which are heterogeneous functional groups, with each other to enhance the bonding force.

As the second tackifier includes the acryl group, the base and the acryl group react with each other to apply the bonding force.

In addition, the second tackifier may include a (meth) acrylic group-containing silane compound. Specifically, the second tackifier may include at least one type selected from the group consisting of 3-(methacryloxypropyl) trimethoxysilane, 3-(methacryloxypropyl) triethoxysilane, 3-(acryloxypropyl) trimethoxysilane, and 3-(acryloxypropyl) triethoxysilane.

The first tackifier and the second tackifier may be included in a weight ratio ranging from 1:0.3 to 1:40, or ranging from 1:1 to 1:10. When the weight ratio between the first tackifier and the second tackifier is less than the range, the bonding force of the cured product is inferior. When the weight ratio between the first tackifier and the second tackifier is over the range, the surface of the cured product may be defective.

The tackifier may be included in the composition, in a content ranging from 0.05 to 10 wt parts, ranging from 0.5 to 7 wt parts or ranging from 1 to 4 wt parts, based on 100 wt parts of the organohydroxypolysiloxane. When the content of the tackifier is less than the content range, the bonding force of the composition may be insufficient. When content of the tackifier is over the content range, as the outer appearance of the cured product is muddy, the tackifier may not be applied as a transparent coating agent.

Specifically, the siloxane composition may include the first tackifier in content ranging from 0.05 to 5 wt parts or ranging from 0.1 to 4 wt parts, and the second tackifier in content ranging from 0 to 9 wt parts or ranging from 0.2 to 7 wt parts, based on 100 wt parts of the organohydroxypolysiloxane. When the content of the first tackifier is less than the range, the surface of the cured product may be delaminated from the base. When the content of the first tackifier is over the range, an outer appearance may be discolored after cured.

### Additives

The moisture-curable siloxane composition may further include an additive generally used in the art. For example, the moisture-curable siloxane composition may be an antistatic agent, a pigment, a colorant, an ultraviolet absorber, a fluorescent agent, a heat resistant agent, a flame retardant, an antioxidant, a radical scavenger, or a light stabilizer.

The moisture-curable siloxane composition may have a viscosity of at most 1,500 cP, a viscosity ranging from 50 to 1,500 cP, or ranging from 100 to 1,000 cP, at the temperature of 25 °C. In addition, the moisture-curable siloxane composition may show a set-to-touch time of at most 15 minutes, ranging from 1 minute to ten minutes, or ranging from 3 minutes to 10 minutes, based on JIS K6249.

In addition, as the moisture-curable siloxane composition does not include a filler, the moisture-curable siloxane composition shows excellent transparency and hardness in the prepared cured product. Accordingly, the moisture-curable siloxane composition is appropriate to a sensitive field such as an electrical and electronic field. In this case, the filler may be silica.

As described above, according to the present disclosure, the moisture-curable siloxane composition has an excellent adhesion property to a base, a proper set-to-touch time, and a proper viscosity to show excellent workability and a curable property at a normal temperature.

### Cured product

According to the present disclosure, the cured product is prepared by curing the siloxane composition.

The cured product having an average thickness of 6 mm has the hardness of Shore A ranging from 80 to 95, or ranging from 85 to 94.

The cured product having an average thickness of 2 mm has shear strength of at least 2.5 MPa, a shear strength of at least 3.5 MPa, or a shear strength ranging from 3.5 MPa to 5.0 MPa.

As described above, the cured product shows excellent transparency and excellent hardness, shows less surface tackiness, and shows excellent thermal shock resistance, so the cured product is appropriate to a sensitive field such as an electrical and electronic field.

### [Mode for Invention]

Hereinafter, the present disclosure will be described in detail through an embodiment. However, these embodiments are provided only for the illustrative purpose, and the scope of the present disclosure is not limited to the embodiments even in any meaning.

### Preparation example 1. Preparation of organohydroxypolysiloxane

### 1-1: Preparation of Organohydroxypolysiloxane -1 (Synthesis Example 1)

Branched organopolysiloxane (weight average molecular weight (MW): 3,000 g/mol, silanol content: 2.05 wt%, manufacturer: KCC silicon) capped with trimethylsiloxy group, and xylene was mixed in a weight ratio of 1:1, in a flask and the mixture was prepared. Thereafter, 22 wt parts of tetramethoxysilane was put into 100 wt parts of mixture and stirred for 10 minutes. 0.5 wt parts of sulfuric acid serving as a catalyst was introduced into the result, and stirred at 25 °C for 24 hours, and 10 wt parts of NaHCO₃ was introduced into the result and stirred for one hour. Thereafter, filtering was performed using a filter to remove NaHCO₃ to obtain a transparent liquid (organohydroxypolysiloxane-1) having the viscosity of 8 cP at 25°C and 60 wt% of solid content. Thereafter, pressure was reduced to 5 torr at 60 °C to remove xylene.

As an analyst result of ²⁹Si-NMR, the prepared organohydroxypolysiloxane-1 consisted of 43.89 mole% of SiO_{1/2}(CH₃)₃ unit, 2.60 mol% ,of SiO_{1/2}(OCH₃)₃ unit, 2.91 mol% of SiO_{2/2}(OCH₃)₂ unit, 3.82 mol% of SiO_{3/2}(OCH₃) unit, 0.08 mol% of SiO_{3/2}(OH) unit, and 46.70 mol% of SiO_{4/2} unit. In addition, the prepared organohydroxypolysiloxane-1 had 0.011 mmol/g of OH group and 2.35 mmol/g of OCH₃ group.

### 1-2: Preparation of Organohydroxypolysiloxane -2 (Synthesis Example 2)

Branched organopolysiloxane (weight average molecular weight (MW): 3,000 g/mol, silanol content: 2.05 wt%, manufacturer: KCC silicon) capped with a trimethylsiloxy group, and xylene were mixed in a weight ratio of 1:1, in a flask and the mixture was prepared. Thereafter, 33 wt parts of tetramethoxysilane was put into 100 wt parts of mixture and stirred for 10 minutes. 0.5 wt parts of sulfuric acid serving as a catalyst was introduced into the result, and stirred at 25 °C for 24 hours, and 10 wt parts of NaHCO₃ was introduced into the result and stirred for one hour. Thereafter, filtering was performed using a filter to remove NaHCO₃ to obtain a transparent liquid (organohydroxypolysiloxane-1) having the viscosity of 8 cP at 25°C and 60 wt% of solid content. Thereafter, pressure was reduced to 5 torr at 60 °C to remove xylene.

As an analyst result of ²⁹Si-NMR, the prepared organohydroxypolysiloxane-2 consisted of 43.52 mole% of SiO_{1/2}(CH₃)₃ unit, 2.78 mol% of SiO_{1/2}(OCH₃)₃ unit, 3.77 mol% of SiO_{2/2}(OCH₃)₂ unit, 4.04 mol% of SiO_{3/2}(OCH₃) unit, 0.1 mol% of SiO_{3/2}(OH) unit, and 45.79 mol% of SiO_{4/2} unit. In addition, the prepared organohydroxypolysiloxane-2 had 0.11 mmol/g of OH group and 2.66 mmol/g of OCH₃ group.

### 1-3: Preparation of Organohydroxypolysiloxane -3

As an analyst result of ²⁹Si-NMR for the organohydroxypolysiloxane-3, polysiloxane consisting of 45.32 mole% of SiO_{1/2}(CH₃)₃ unit, 4.38 mol% of SiO_{3/2}(OH) unit, and 50.3 mol% of SiO_{4/2} unit was used. In addition, the organohydroxypolysiloxane-3 had 0.11 mmol/g of OH group and 0 mmol/g of OCH₃ group.

### Experimental examples 1 to 22. Preparation of moisture-curable siloxane composition

The moisture-curable siloxane composition was prepared by mixing the components as described in Tables 1 to 3.

**Table 1**

| Component (wt parts) | Exper iment al exam ple 1 | Exper iment al exam ple 2 | Exper iment al exam ple 3 | Exper iment al exam ple 4 | Exper iment al exam ple 5 | Exper iment al exam ple 6 | Exper iment al exam ple 7 |
|---|---|---|---|---|---|---|---|
| Organohydroxypolysiloxan-1 | 100.0 | 100.0 | 100.0 | 100.0 | 100.0 | 100.0 | |
| Organohydroxypolysiloxane -2 | | | | | | | 100.0 |
| organohydroxypolysiloxane-3 | | | | | | | |
| <First organopolysiloxane-1> | 20.0 | 8.5 | 26.2 | 72.2 | 50.0 | 37.2 | 32.5 |
| <First organopolysiloxane-2> | 52.9 | 52.9 | 63.2 | 63.1 | 37.7 | 27.9 | 50.0 |
| <Second organopolysiloxane-1> | 79.1 | 89.7 | | 39.2 | 63.7 | 56.2 | 48.6 |
| <Second organopolysiloxane-2> | | | 50.3 | | | | |
| First tackifier | 0.9 | 3.8 | 0.6 | 3.3 | 0.3 | 0.5 | 0.1 |
| Second tackifier | | | | | 1.4 | 1.5 | 1.3 |
| Alkoxy group-containing silane compound, | 35.3 | 30.3 | 48.5 | 42.5 | 26.3 | 27.4 | 16.3 |
| Curing catalyst | 5.9 | 8.8 | 5.3 | 6.5 | 6.3 | 5.6 | 1.3 |

**Table 2**

| Component (wt parts) | Expe rime ntal exam ple 8 | Exper iment al exam ple 9 | Exper iment al exam ple 10 | Exper iment al exam ple 11 | Exper iment al exam ple 12 | Expe rimen tal exam ple 13 | Exper iment al exam ple 14 |
|---|---|---|---|---|---|---|---|
| Organohydroxypolysiloxane-1 | | 100 | 100 | | 100 | 100 | 100 |
| Organohydroxypolysiloxane-2 | 100 | | | | | | |
| Organohydroxypolysiloxane-3 | | | | 100 | | | |
| First organopolysiloxane-1 | 63.3 | 9.7 | 5.0 | 127.8 | 20.0 | 20.0 | 20.0 |
| First organopolysiloxane-2 | 66.7 | 52.9 | 52.9 | 13.9 | 58.5 | 52.9 | 52.9 |
| Second organopolysiloxane-1 | 58.5 | | 47.9 | | 79.1 | 70.3 | 20.3 |
| Second organopolysiloxane-2 | | 95.0 | 16.5 | | | | |
| First tackifier | 0.2 | 0.6 | 0.9 | | | | |
| Second tackifier | 6.7 | 0.6 | 0.3 | | | | |
| Third tackifier | | | | 2.78 | 0.29 | 0.29 | 0.29 |
| Fourth tackifier | | | | | 0.59 | 0.59 | 0.59 |
| Alkoxy group-containing silane compound, | 29.0 | 29.4 | 64.7 | 27.8 | 35.3 | 35.3 | 94.1 |
| Curing catalyst | 9.0 | 5.9 | 5.9 | 5.6 | 0.3 | 14.7 | 5.9 |

**Table 3**

| Component (wt parts) | Exper iment al exam ple 15 | Exper iment al exam ple 16 | Exper iment al exam ple 17 | Exper iment al exam ple 18 | Exper iment al exam ple 19 | Exper iment al exam ple 20 | Exper iment al exam ple 21 | Exper iment al exam ple 22 |
|---|---|---|---|---|---|---|---|---|
| Organohydroxypoly siloxane-1 | 100 | 100 | 100 | 100 | 100 | 100 | 100 | 100 |
| Organohydroxypoly siloxane-2 | | | | | | | | |
| Organohydroxypoly siloxane-3 | | | | | | | | |
| First organopolysiloxane-1 | 20.0 | 20.0 | 20.6 | 22.2 | 20.0 | 25.5 | 0.8 | |
| First organopolysiloxane-2 | 82.4 | 52.9 | 52.9 | 53.2 | 111.8 | 147.5 | 51.4 | 151.5 |
| Second organopolysiloxane-1 | 79.1 | 67.4 | 79.4 | 104.8 | 21.0 | 47.6 | 76.9 | |
| Second organopolysiloxane-2 | | | | | | | | |
| Second tackifier | | | | | 0.15 | | | 1.5 |
| Third tackifier | 0.29 | 12.6 | 0.03 | 0.03 | 0.03 | 1.87 | | |
| Fourth tackifier | 0.59 | | | 0.16 | | | 1.34 | |
| Alkoxy group-containing silane compound, | 5.9 | 35.3 | 35.3 | 39.1 | 35.3 | 45.0 | 32.1 | 35.3 |
| Curing catalyst | 5.9 | 5.9 | 5.9 | 6.5 | 5.9 | 7.5 | 5.4 | 5.9 |

The manufacturer, a product name, or a material name of each component used in the experimental example is shown in Table 4, and the viscosity of the organopolysiloxane at 25 °C is a value measured by a Brookfield viscometer (LVDV).

**Table 4**

| Component (wt parts) | Physical Properties, Structure, or Compound Name |
|---|---|
| Organohydroxypolysiloxane-1 | [SiO_{1/2}(CH₃)₃]_{43.89}[SiO_{1/2}(OCH₃)₃]_{2.6}[SiO_{2/2}(OCH₃)₂]_{2.91} [SiO_{3/2}(OCH₃)]_{3.82}[SiO_{4/2}]_{46.7}(OH)_{0.08} |
| Organohydroxypolysiloxane-2 | [SiO_{1/2}(CH₃)₃]_{43.52}[SiO_{1/2}(OCH₃)₃]_{2.78}[SiO_{2/2}(OCH₃)₂]_{3.7 7}[SiO_{3/2}(OCH₃)]_{4.04}[SiO_{4/2}]_{45.79}(OH)_{0.1} |
| Organohydroxypolysiloxane-3 | [SiO_{1/2}(CH₃)₃]_{45.32}[SiO_{4/2}]_{50.3}(OH)_{4.38} |
| First organopolysiloxane-1 | Organopolysiloxane (viscosity at 25 °C: 60 mPa·s) having opposite ends capped with trimethylsiloxy group |
| First organopolysiloxane-2 | Organopolysiloxane (viscosity at 25 °C: 5,000 mPa·s) having opposite ends capped with trimethylsiloxy group |
| Second organopolysiloxane-1 | Organopolysiloxane (viscosity at 25 °C: 5,000 mPa·s) having opposite ends capped with hydroxyl group |
| Second organopolysiloxane-2 | Organopolysiloxane (viscosity at 25 °C: 1,000 mPa·s) having opposite ends capped with hydroxyl group |
| First tackifier | α,2,4,6,6,8-Hexamethylcyclotetrasiloxanepropanoic acid 3-(trimethoxysilyl)propyl ester. |
| Second tackifier | 3-(Methacryloxy) propyl trimethoxysilane, |
| Third tackifier | 3-Glycidoxypropyltrimethoxysilane |
| Fourth tackifier | 3-Aminopropyltriethoxysilane |
| Alkoxy group-containing silane compound, | Methyltrimethoxysilane |
| Curing catalyst | Diisopropoxy-di(ethoxyacetylacetonato)titanate |

### Test example: Evaluation of characteristics

The physical properties of the moisture-curable siloxane composition of the experimental example and a cured sheet prepared therefrom were measured in the following manner, and the results are shown in Table 5.

Specifically, the cured sheet was prepared by curing the moisture-curable siloxane composition according to the experimental example at the temperature of 25 °C and a relative humidity of 50% for seven days in a mold for molding a sheet having a thickness of 2 mm.

### (1) Viscosity

The viscosity was measured for the moisture-curable siloxane composition according to the experimental example, under shear force of 10/s at 25 °C by using Rheometer (MCR301; Anton Paar).

### (2) Set-to-touch time

The set-to-touch time of the moisture-curable siloxane composition was measured based on JIS K6249. Specifically, after the composition was coated on a PET film to a thickness of 60 µm, the surface was lightly contacted with a finger, and the time for which the composition was not transferred to the end of the finger was measured.

### (3) Hardness

After three cured sheets were laminated to have a thickness of 6 mm, the result was measured at 25 °C using a Shore A hardness-type hardness meter.

### (4) Shear Strength

The moisture-curable siloxane composition was applied by a width of 2.5 cm and a length of 0.5 cm at the end of an aluminum specimen having a width of 2.5 cm and a length of 6 cm, and another aluminum specimen was placed thereon to have the thickness of 2 mm. Then, the result structure was cured at the temperature of 25 °C and the relative humidity of 50% for seven days, and then the shear strength thereof was measured using a universal testing machine (UTM FID) to determine the bonding force.

### (5) Surface tackiness

The degree of tackiness was evaluated when the finger was lightly touched with and lifted off the surface of the cured sheet. In this case, the relative evaluation was performed by setting significantly lower tackiness to '1' and setting significantly higher tackiness to '5'.

### (6) Thermal Shock Test

The moisture-curable siloxane composition was coated on a PCB substrate and cured at the temperature of 25 °C with the relative humidity of 50% for seven days. Thereafter, on the assumption of leaving at -40 °C for 30 minutes and at 125 °C for 30 minutes through a thermal shock tester is set to one cycle, 1,000 cycles was performed in total. Thereafter, delamination and crack of the coating layer (the cured product including the moisture-curable siloxane composition) were determined by a microscope, after stored at 25 °C for 1 day. In this case, a coating layer delaminated or cracked was marked as 'O', and a coating layer not delaminated or cracked was marked as 'X'.

### (7) High Temperature and High Humidity Test

The moisture-curable siloxane composition was coated on a PCB substrate and cured at the temperature of 25 °C with the relative humidity of 50% for seven days. After left at the temperature of 85 °C with the relative humidity of 85% for 1,000 hours through a high temperature and high humidity tester, the result stored at 25 °C for one day. Thereafter, delamination and crack of the coating layer (the cured product including the moisture-curable siloxane composition) was determined by a microscope. In this case, a coating layer delaminated and/or cracked was marked as 'O', and the coating layer not delaminated or cracked was marked as 'X'.

### (8) Storage Stability

The moisture-curable organopolysiloxane composition was put into a glass vial, sealed, and stored in an oven at 80 °C for 14 days, and then the set-to-touch time was measured in the same manner as in item (2).

**Table 5**

| | Viscosi ty (mPa·s) | Set-to-touch time (minute s) | Outer appearan ce of sheet. | Hard ness (shor e A) | She ar stre ngt h (M Pa) | Surface tackine ss | The rmal shoc k test | High temp eratu re and high hum idity test | Storage stability (minute ) |
|---|---|---|---|---|---|---|---|---|---|
| Target | At most 1,500 | At most 15 min. | Transpar ent | 80-95 | At leas t 2.5 | At most 2 | X | X | At most 30 min. |
| Exper iment al exam ple 1 | 1,300 | 4 | Transpar ent | 91 | 4.2 | 1 | X | X | 8 |
| Exper iment al exam ple 2 | 1,400 | 3 | Transpar ent | 87 | 3.8 | 1 | X | X | 7 |
| Exper iment al exam ple 3 | 500 | 4 | Transpar ent | 94 | 4.2 | 1 | X | X | 7 |
| Exper iment al exam ple 4 | 300 | 4 | Transpar ent | 89 | 4.1 | 1 | X | X | 7 |
| Exper iment al exam ple 5 | 850 | 4 | Transpar ent | 93 | 4.8 | 1 | X | X | 7 |
| Exper iment al exam ple 6 | 950 | 4 | Transpar ent | 93 | 4.7 | 1 | X | X | 7 |
| Exper iment al exam ple 7 | 880 | 10 | Transpar ent | 88 | 4.4 | 1 | X | X | 10 |
| Exper iment al exam ple 8 | 654 | 3 | Transpar ent | 94 | 4.5 | 1 | X | X | 7 |
| Exper iment al exam ple 9 | 530 | 5 | Transpar ent | 90 | 4.6 | 1 | X | X | 8 |
| Exper iment al exam ple 10 | 181 | 5 | Transpar ent | 90 | 4.5 | 1 | X | X | 8 |
| Exper iment al exam ple 11 | 95 | 10 | Transpar ent | 80 | 2.1 | 5 | X | X | 15 |
| Exper iment al exam ple 12 | 970 | Not cured | Transpar ent | Not cured | | | | | |
| Exper iment al exam ple 13 | 1,100 | 3 | Discolor ed | 90 | 3.4 | 2 | X | X | 5 |
| Exper iment al exam ple 14 | 75 | Not cured | Discolor ed | Not cured | | | | | |
| Exper iment al exam ple 15 | 3,680 | 65 | Transpar ent | 48 | 2.5 | 3 | X | X | Not cured |
| Exper iment al exam ple 16 | 450 | 7 | Opaque | 75 | 1.1 | 3 | O | X | 30 |
| Exper iment al exam ple 17 | 1,300 | 4 | Transpar ent | 90 | 0.5 | 1 | O | X | 23 |
| Exper iment al exam ple 18 | 1,220 | 3 | Transpar ent | 75 | 2.5 | 1 | X | X | 45 |
| Exper iment al exam ple 19 | 778 | 4 | Transpar ent | 95 | 2.6 | 2 | O | O | 23 |
| Exper iment al exam ple 20 | 430 | 6 | Transpar ent | 65 | 1.9 | 3 | O | X | 34 |
| Exper iment al exam ple 21 | 1,880 | 3 | Transpar ent | 81 | 3.1 | 4 | O | X | 50 |
| Exper iment al exam ple 22 | 2,200 | 4 | Transpar ent | 85 | 0.7 | 2 | O | X | 8 |

As shown in Table 5, the moisture-curable siloxane compositions according to Experimental examples 1 to 10 were proper in viscosity and set-to-touch time to show excellent workability and excellent storage stability. In addition, the cured sheet prepared using the composition was excellent in outer appearance, hardness, and shear strength, which shows an excellent mechanical property, and excellent in heat resistance which shows an excellent thermal shock test and an excellent high temperature high humidity test, and showed less surface tackiness.

Meanwhile, the cured sheet prepared from Experimental examples 11, 16, 17, and 20 including only the third tackifier including an epoxy group showed shear strength insufficient. In particular, the sheet from Experimental example 11 including the organohydroxypolysiloxane-3 which did not include an alkoxy group had surface tackiness significantly severe. In addition, the sheet from Experimental example 16 including an excessive amount of the third tackifier had an opaque outer appearance, insufficient hardness, a surface tacky, and insufficient heat resistance. Further, the sheet of Experimental example 17 including a smaller amount of third tackifier was cracked due to the insufficient heat resistance after undergone the thermal shock test.

In addition, Experimental example 12 including 3-glycidoxypropyltrimethoxysilane (third tackifier) and 3-aminopropyltriethoxysilane (fourth tackifier) as tackifiers and including a smaller amount of curing catalyst, and Experimental example 14 including a smaller amount of second organopolysiloxane and an excessive amount of alkoxy group-containing silane compound were failed to be cured at a normal temperature and were not cured.

The sheet from Experimental example 13 including an excessive amount of curing catalyst was discolored.

In addition, the composition according to Experimental example 15 including a small amount of alkoxy group-containing silane compound had a higher viscosity and a longer set-to-touch time, to show insufficient workability and insufficient storage stability. Accordingly, the sheet prepared from this shows insufficient hardness and the surface tacky.

The composition according to Experimental example 18 including an excessive amount of second organopolysiloxane showed insufficient storage stability, so the sheet prepared to this shows insufficient hardness.

In addition, for Experimental example 19 including a smaller amount of second organopolysiloxane, the sheet showed insufficient heat resistance. Accordingly, the sheet was cracked after the thermal shock test and the high temperature and high humidity test.

Experimental example 21 including a smaller amount of first organopolysiloxane and Experimental example 22 not including the second organopolysiloxane showed excessively higher viscosity at 25 °C. Accordingly, the workability was significantly insufficient, and the heat resistance of the sheet was insufficient, so the sheet was cracked after the thermal shock test. In particular, the composition according to Experimental example 21 showed insufficient storage stability and even the surface of the sheet tacky. In addition, Experimental example 22 showed insufficient shear strength in sheet.

## Claims

1. A moisture-curable siloxane composition comprising:
organohydroxypolysiloxane, organopolysiloxane, an alkoxy group-containing silane compound, a curing catalyst, and a tackifier,
wherein the organohydroxypolysiloxane includes an alkoxy group-containing repeating unit,
wherein the organopolysiloxane includes first organopolysiloxane capped with an alkoxy group at opposite ends, and second organopolysiloxane capped with a silanol group at opposite ends, and
wherein the tackifier includes a cyclosiloxane-based compound.

2. The moisture-curable siloxane composition of claim 1, wherein the organohydroxypolysiloxane is expressed through following Chemical formula 1,
[Chemical formula 1] [SiO_{1/2}(R¹)₃]ₐ[SiO_{1/2}(OR²)₃]_{b}[SiO_{2/2}(OR³)₂]_{c}[SiO_{3/2}(OR⁴)]_{d}[SiO_{4/2}]ₑ(OH)_{f},
in which, in Chemical formula 1,
each of R¹ to R⁴ is independently hydrogen, or an alkyl group, a cycloalkyl group, an alkenyl group, an aryl group, or an aralkyl group which is substituted or unsubstituted.
'a' is greater than '0.2' and less than '0.6',
'b + c + d' is greater than '0.01' and less than '0.2',
'e' is '0.09' to '0.7',
'f' is greater than '0' and less than '0.05', and
'a + b + c + d + e + f' is 1.

3. The moisture-curable siloxane composition of claim 1, wherein the first organopolysiloxane is expressed through following Chemical formula 2, and
wherein the first organopolysiloxane includes a (1-1)-th organopolysiloxane having viscosity ranging from 10 to 500 cp at 25 °C; and a (1-2)-th organopolysiloxane having viscosity ranging from 1,000 to 10,000 cP at 25 °C.
[Chemical formula 2] [(R⁵O)₍₃₋ᵢ₎Si(R⁶)ᵢ]-Y¹-[SiO_{2/2}(R⁷)₂]ⱼ-[Si(R⁸)₂]-Y²-[(R⁵O)₍₃₋ᵢ₎Si(R⁶)ᵢ]
in which, in Chemical formula 2,
each of R⁵ to R⁸ is independently an alkyl group, a cycloalkyl group, an alkenyl group, an aryl group, or an aralkyl group which is substituted or unsubstituted,
each of Y¹ and Y² is independently an oxy group, or an alkylene group which is substituted or unsubstituted,
'i' is 0 or 1, and
'j' is an integer of 1 to 300.

4. The moisture-curable siloxane composition of claim 1, wherein the second organopolysiloxane is expressed through following Chemical formula 3,
[Chemical formula 3] HO-[(SiO_{2/2}(R¹⁰)₂]ₖ-OH
in which, in Chemical formula 3,
R¹⁰ may be an alkyl group, a cycloalkyl group, an alkenyl group, an aryl group,
or an aralkyl group which is substituted or unsubstituted, and
'k' is a number allowing viscosity of the second organopolysiloxane at 25 °C to range from 100 to 100,000 cP.

5. The moisture-curable siloxane composition of claim 1, wherein the tackifier is expressed through following Chemical formula 4, 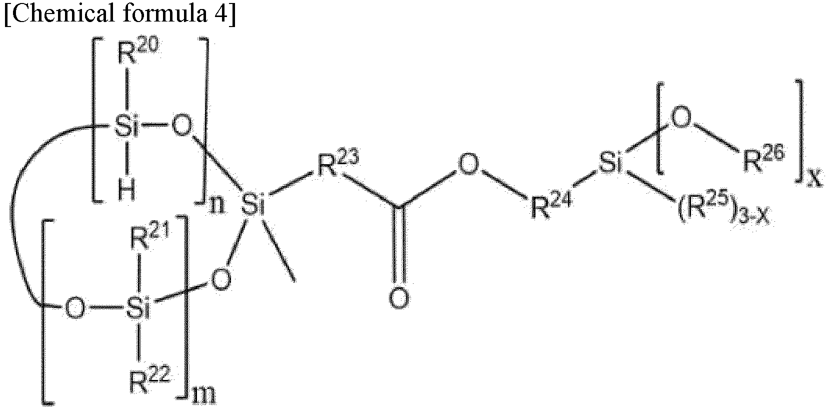
in which in Chemical formula 4,
each of R²⁰ to R²², and R²⁵ and R²⁶ is independently an alkyl group which is substituted or unsubstituted,
each of R²³ and R²⁴ is independently an alkylene group which is substituted or
unsubstituted, and
each of 'm', 'n', and 'x' may ranges from 1 to 3, independently.

6. The moisture-curable siloxane composition of claim 5, wherein the tackifier includes:
a first tackifier containing a cyclosiloxyl group; and
a second tackifier containing an acryl group, and
wherein the first tackifier and the second tackifier are contained in a weight ratio ranging from 1:0.3 to 1:40.

7. The moisture-curable siloxane composition of claim 1, wherein 100 wt parts of organohydroxypolysiloxane, 55 to 140 wt parts of first organopolysiloxane, 30 to 100 wt parts of second organopolysiloxane, 10 to 85 wt parts of alkoxy group-containing silane compound, 1 to 10 wt parts of curing catalyst, and 0.05 to 10 wt parts of tackifier are provided.

8. A cured product prepared by curing the siloxane composition according to any one of claim 1 to claim 7.
